# EUROPEAN PATENT APPLICATION

(11) **EP 4 757 313 A1**
(43) Date of publication of application: **10.06.2026**
(21) Application number: 24315557.9
(22) Date of filing: 09.12.2024
(51) Int. Cl.: H04N 19/593, H04N 19/105

(54) **METHOD AND APPARATUS FOR PROCESSING A PICTURE USING A MODIFIED ANGLE DENSITY FOR AN ANGULAR INTRA PREDICTION**

(71) Applicant: Beijing Xiaomi Mobile Software Co., Ltd., Beijing Beijing 100085 (CN)
(72) Inventor: Abdoli, Mohsen, Beijing, 100085 (CN); Tissier, Alexandre, Beijing, 100085 (CN); Plowman, Frank, Beijing, 100085 (CN); Ghaznavi Youvalari, Ramin, Beijing, 100085 (CN)
(74) Representative: Zimmermann, Tankred Klaus

(57) **Abstract**

A method of processing one or more blocks of a picture includes performing an angular intra prediction of a block of the picture using an angle selected from a plurality of angles. An angle density of the plurality of angles is changed dependent on one or more properties of a neighborhood of the block.

## Description

### Technical Field

The present disclosure generally relates to the field of encoding/decoding pictures, images or videos, and embodiments of the present disclosure concern improvements regarding a prediction. More specific embodiments of the present disclosure relate to the use of a modified angle density for an angular intra prediction.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, an angular intra prediction method using a fixed angle density map of angular IPMs may be performed.

Thus, there is a need to provide further improvements for processing a picture, an image or a video using an angular intra prediction, e.g., when encoding and/or decoding of the picture, the image or the video.

### Summary

The present disclosure provides a method of processing one or more blocks of a picture, the method comprising:
performing an angular intra prediction of a block of the picture using an angle selected from a plurality of angles, wherein an angle density of the plurality of angles is changed dependent on one or more properties of a neighborhood of the block.

Optionally, the one or more properties of the neighborhood of the block comprise one or more of the following:
- a statistic of angular intra prediction modes, IPMs, used by one or more further blocks in the neighborhood of the block,
- a texture of one or more further blocks in the neighborhood of the block.

Optionally, the angle is an actual directional angle used for an angular intra prediction mode (IPM) for projecting reference samples of the block onto sample positions within the block, and wherein the angle is obtained from an angle density map providing the angles for the angular intra prediction modes (IPMs) with the angle density.

Optionally, the angle density is changed by replacing a currently used angle density map with a new angle density map, and wherein the new angle density map is selected from one or more predefined angle density maps.

Optionally, the new angle density map is selected dependent on a texture of one or more further blocks in the neighborhood of the block by using
- statistics of angular intra prediction mode (IPMs) selected by one or more further blocks in the neighborhood of the block, or
- a texture analysis of reconstructed samples from one or more further blocks in the neighborhood of the block.

Optionally, the texture analysis is performed to determine one or more dominant angles, and, dependent on the one or more dominant angles, the currently used angle density map is maintained or an angle density map, which fits best the one or more dominant angles, is selected from the one or more predefined angle density maps.

Optionally, the new angle density map is signaled explicitly in the data stream.

Optionally, the new angle density map is not signaled, and wherein the new angle density map is determined implicitly using a texture of one or more further blocks in the neighborhood of the block.

Optionally, the angle density is changed by adapting a currently used angle density map.

Optionally, the currently used angle density map is adapted to a texture of one or more further blocks in the neighborhood of the block, by using
- statistics of angular intra prediction mode (IPMs)selected by one or more further blocks in the neighborhood of the block, or
- a texture analysis of reconstructed samples from one or more further blocks in the neighborhood of the block.

Optionally, the texture analysis is performed to determine one or more dominant angles, and, dependent on the one or more dominant angles, the currently used angle density map is maintained or is adapted such that an angle density around the one or more dominant angles is increased.

Optionally, a change of the currently used angle density map is not signaled, and wherein an adapted angle density map is obtained by adapting the currently used angle density map to the texture of one or more further blocks in the neighborhood of the block.

Optionally,
changing the angle density by replacing a currently used angle density map by a new angle density map or by adapting the currently used angle density map is performed at one of a plurality of different processing levels, and
the plurality of different processing levels comprises:
- a sequence-level at which all coding units (CUs) in all coding tree units (CTUs) of all frames of a video content use the same new or adapted angle density map,
- a frame-level at which the currently used angle density map is replaced or adapted at the beginning of a frame of a video content so that all coding units (CUs) of all coding tree units (CTUs) in the frame use the same new or adapted angle density map,
- a CTU-level in which the currently used angle density map is replaced or adapted at the beginning of each coding tree unit (CTU),
- a CU-level at which the currently used angle density map is replaced or adapted for each individual coding unit (CU).

The present disclosure provides a non-transitory computer-readable storage medium comprising instructions which, when executed by a computer, cause the computer to carry out the method of the present disclosure.

The present disclosure provides an apparatus of processing one or more blocks of a picture, the apparatus comprising:
a processing module, wherein the processing module is configured to perform an angular intra prediction of a block of the picture using an angle selected from a plurality of angles, wherein an angle density is changed dependent on one or more properties of a neighborhood of the block.

The technical solutions provided according to embodiments of the present disclosure have the following beneficial effects.

In prior art approaches, a fixed angle density map of angular IPMs is used, which may not be optimal for every type of video content due to a low angle density around a certain direction in the content. This results in a coarser granularity of the angular texture modelling, and, in turn, in a poor performance of the prediction, followed by a larger residual signal, that, eventually, increases the bitrate of coded CU.

Embodiments of the present disclosure provide at an encoder and/or at a decoder one or more alternative angle density maps for predicting the CUs, and apply an adaptive strategy to switch from a currently used angle density may, also referred to as the default angle density map, to one of the alternative angle density maps. In accordance with other embodiments, this may be achieved by modifying or adapting, at an encoder and/or at a decoder, an angle density of a currently used angle density may, also referred to as the default angle density map.

The present disclosure is advantageous as it avoids the drawbacks encountered in conventional approaches using fixed angle density maps. For different types of video content, an angle density map is provided having an increased angle density around a certain direction, like a dominant direction, thereby providing for a finer granularity of the angular texture modelling, which, in turn, improves the performance of the prediction. The residual signal is reduced so that, eventually, the bitrate of coded CU is decreased.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates angular Intra Prediction Modes (IPMs) in VVC and ECM,
- Fig. 4: illustrates an example process of an angular intra prediction of a CU,
- Fig. 5(A)-Fig. 5(B): illustrate the difference between a current VVC angle density and a HEVC angle density with uniform angle distribution
- Fig. 6: illustrates a flow diagram of a method of processing one or more blocks of a picture in accordance with embodiments of the present disclosure,
- Fig. 7(A)-Fig. 7(B): illustrate two fixed alternative density maps in accordance with embodiments of the present disclosure,
- Fig. 8: illustrates a texture analysis process for selecting an alternative angle density map/adapting a currently used angle density map in accordance with embodiments of the present disclosure,
- Fig. 9: illustrates a process at a decoder side to parse explicit information about the adaptive angle density map switching map in accordance with embodiments of the present disclosure,
- Fig. 10: illustrates the process at a decoder side to implicitly determine the alternative angle density map based on a dominant angle computed by a texture analysis on the casual neighborhood of a CU in accordance with embodiments of the present disclosure,
- Fig. 11: illustrates a flow diagram of a method for decoding an encoded data stream in accordance with embodiments of the present disclosure,
- Fig. 12: illustrates a flow diagram of a method for encoding a picture into an encoded data stream in accordance with embodiments of the present disclosure,
- Fig. 13: illustrates a block diagram of an apparatus of processing one or more blocks of a picture in accordance with embodiments of the present disclosure,
- Fig. 14: illustrates a block diagram of a decoder for decoding an encoded data stream in accordance with embodiments of the present disclosure,
- Fig. 15: illustrates a block diagram of an encoder for encoding a picture into an encoded data stream in accordance with embodiments of the present disclosure,
- Fig. 16: illustrates a data stream in accordance with embodiments of the present disclosure, and
- Fig. 17: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if', "when", "in case", "responsive to" may be used interchangeably.

### Standard Video Coder

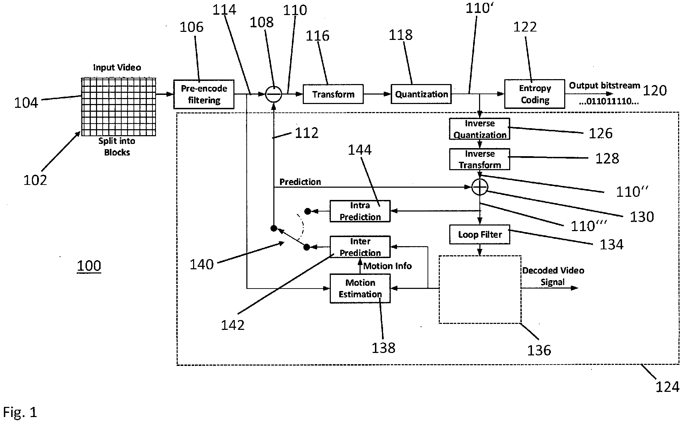

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

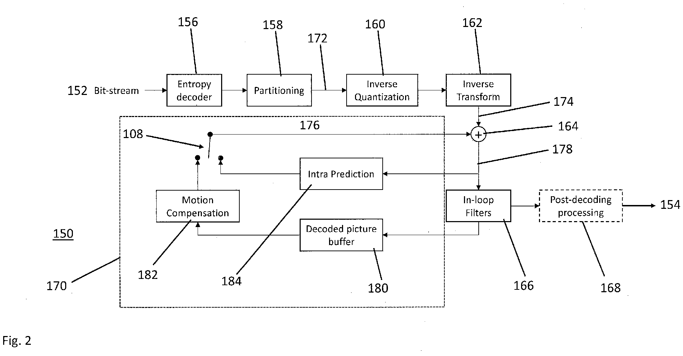

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Angular Intra Prediction Mode (IPM) in VVC and ECM

There exists a set of 67 Intra Prediction Modes (IPMs) in both VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

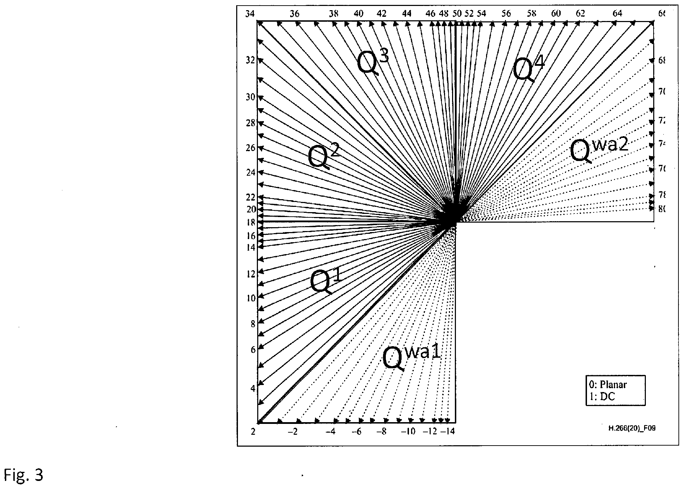

Fig 3 illustrates angular Intra Prediction Modes (IPMs) in VVC and ECM. In Fig. 3, the solid lines (indexes) indicate non-wide-angle IPMs and the dashed lines (indexes) indicate wide-angle IPMS. As is show in Fig. 3, the non-wide-angle IPMs cover an angle range of between 45 degrees and 225 degrees, while the wide-angle IPMs extend their extremes by 45 degrees from each side. Furthermore, one can divide the set of IPMs into four non-wide-angle quarters Q¹, Q², Q³ and Q⁴, as well as two wide-angle quarters Q^{wa1} and Qwa2.

### Angle density map and angular intra prediction

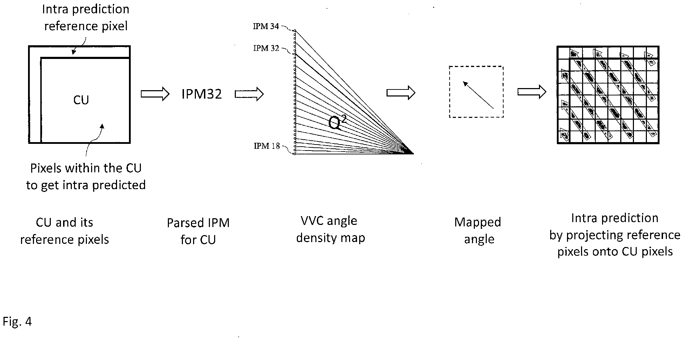

In the present disclosure, the term *"angle density map"* refers to a scheme for mapping an IPM index to an actual directional angle. This directional angle is then used by the intra prediction process to project reference pixels of the CU onto pixel positions within the CU. This process is visualized in Fig. 4, which illustrates an example process of an angular intra prediction of pixels within a CU. Fig. 4 illustrates the CU's pixels to be intra predicted, the CU's reference pixels for the intra prediction, the IPM 32 parsed from a bitstream for the intra prediction and the default angle density map of VVC/ECM. From the default angle density map the actual directional angle or mapped angle for IPM 32 is obtained and used for projecting reference pixels onto CU pixels.

For the sake of readability, in the rest of the present disclosure, an angle density map is visualized only in the second quadrant (Q²), which corresponds to the angular IPMs between 18 (horizontal) and 34 (diagonal). Angle density maps for other quadrants can be obtained by rotating and/or reflecting the Q² angle density map.

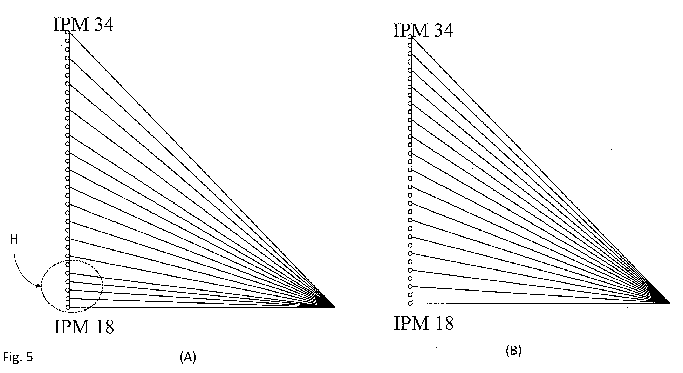

Compared to HEVC, the VVC standard and ECM software offer an adjusted, yet fixed, angle density of the angular IPMs. The motivation is that typically natural content represents objects that are formed by pure horizontal and vertical physical shapes in the real world. To incorporate this statistically valid fact, the VVC/ECM designs put a higher concentration of IPMs around 18 and 50 which correspond to pure horizontal and vertical IPMs, respectively. By doing this, a finer granularity of texture modeling is possible for this type of texture. On the other hand, HEVC uses angular IPMs that almost uniformly cover all angles. Fig. 5(A) and Fig. 5(B) illustrate the difference between a current VVC angle density and a HEVC angle density with uniform angle distribution. More specifically, Fig. 5(A) illustrates an angle density map used in VVC with high concentration around the horizontal IPM 18 (as illustrated at H). Fig. 5(B) illustrates an angle density map with no particular concentration, i.e., a uniform density, not used in VVC but, e.g., in HEVC.

Conventionally, state-of-the-art algorithms use a fixed angle density map of angular IPMs, which is based on the assumption that horizontal and vertical angles are typically more present in different types of video content, e.g., natural, screen content, etc.. While this assumption may be valid in many cases, it may not be true or may be violated in certain scenarios. For instance, when an object appears in a picture or video with an exceptional diagonal texture that occupies a majority of the picture. The assumption may also not apply when an object with physical horizontal and vertical shapes is put in a certain camera perspective, resulting in picture regions with diagonal textures. In these scenarios, the fixed angle density map of VVC/ECM having the lower angle densities around diagonal directions, results in a coarser granularity of the angular texture modelling. This, in turn, results in a poor performance of the prediction, followed by a larger residual signal, that, eventually, increases the bitrate of coded CU.

Embodiments of the present disclosure addresses the drawbacks in conventional approaches by changing a density of IPM angles in order to provide a finer granularity, e.g., when a part of picture has a non-horizontal/non-vertical texture. In accordance with embodiments, this may be achieved by providing at an encoder and/or at a decoder one or more alternative angle density maps for predicting the CUs, and apply an adaptive strategy to switch from a currently used angle density may, also referred to as the default angle density map, to one of the alternative angle density maps. In accordance with other embodiments, this may be achieved by modifying or adapting, at an encoder and/or at a decoder, an angle density of a currently used angle density may, also referred to as the default angle density map.

The present disclosure is advantageous as it no longer relies on fixed angle density maps but provides an angle density map having an increased angle density around a certain direction in a content, like a dominant direction. This yields a finer granularity of the angular texture modelling, which, in turn, improves the performance of the prediction. Further, the residual signal is reduced so that, eventually, the bitrate of coded CU is decreased.

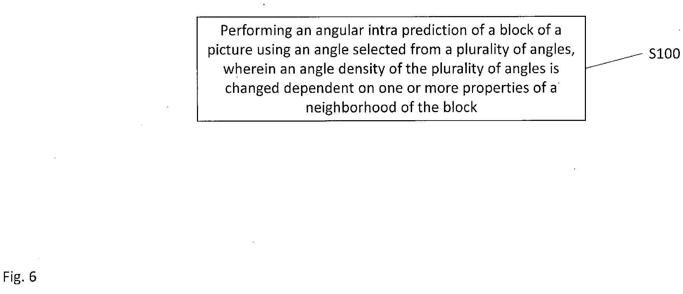

Fig. 6 illustrates a flow diagram of an embodiment of a method of processing one or more blocks of a picture. The method includes:
S100: Performing an angular intra prediction of a block of the picture using an angle selected from a plurality of angles, wherein an angle density of the plurality of angles is changed dependent on one or more properties of a neighborhood of the block.

In accordance with embodiments, the one or more properties of the neighborhood of the block comprise one or more of the following:
- a statistic of angular intra prediction modes, IPMs, used by one or more further blocks in the neighborhood of the block,
- a texture of one or more further blocks in the neighborhood of the block.

Thus, embodiments, provide at least one alternative angle density map at an encoder and/or to a decoder, and each block or CU is able to adaptively choose from the one or more alternative angle density maps (by selecting from a set of predefined angle density maps or by adapting a currently used angle density map) the angle density map, use it to map an IPM index into an actual angle, and then use the mapped angle for an angular intra prediction of the CU.

Embodiments of the present disclosure provide one or more fixed alternative angle density maps or a history-based alternative angle density map.

In accordance with embodiments of the present disclosure, the at least one alternative angle density map is constant and selected from a set of pre-determined angle density maps.

In accordance with embodiments of the present disclosure, the at least one alternative angle density map is adaptively constructed based on the contextual (historical) information that is available both at the encoder side and at the decoder side.

In accordance with embodiments of the present disclosure, a texture analysis on the causal neighborhood of the CU is used for conducting an adaptive angle density map construction.

In accordance with embodiments of the present disclosure, statistical information of angular IPMs in previously coded CUs in the causal neighborhood of the CU are used to adaptively construct the angle density map.

Embodiments of the present disclosure provide a granularity of determining the at least one alternative angle density map.

In accordance with embodiments of the present disclosure, the choice of the at least one adaptive angle density map is made in a sequence level and cannot be revisited throughout the sequence.

In accordance with embodiments of the present disclosure, replacing the at least one alternative angle density map is allowed at a frame level.

In accordance with embodiments of the present disclosure, a finer granularity for replacing the at least one alternative angle density map is provided by allowing it to change at a CTU level.

In accordance with embodiments of the present disclosure, a finest granularity is provided by allowing at a CU level to replace the at least one alternative angle density map.

Embodiments of the present disclosure provide for an explicit or implicit switching to the alternative angle density map.

In accordance with embodiments of the present disclosure, the decision whether a CU uses an alternative angle density map is explicitly signaled in a bitstream with at least one syntax element.

In accordance with embodiments of the present disclosure, the at least one syntax element includes a flag indicating whether an alternative angle density map has been used. Depending on a number of available alternative angle density maps, another syntax element might be transferred to indicate which of the at least one alternative angle density maps has been used by the CU.

In accordance with embodiments of the present disclosure, necessary information to determine whether an alternative angle density map has been used is implicitly determined.

In accordance with embodiments of the present disclosure, the implicit process includes a texture analysis on the causal neighborhood to determine at least one dominant angle. Then the dominant angle is compared to a threshold parameter to determine about using an alternative angle density map.

In accordance with embodiments of the present disclosure, the implicit process relies on statistical characteristics of previously coded CUs in the causal neighborhood to determine whether to use an alternative angle density map.

Embodiments of the present disclosure are now described in more detail. In the following, embodiments for determining an alternative angle density map, embodiments relating to an adaptive strategy of switching to an alternative angle density map, and embodiments concerning a granularity of determining an alternative angle density map are described. For the sake of simplicity, the embodiments are described with reference to only one alternative angle density map. However, the present disclosure is not limited to such embodiments. In accordance with other embodiments, also more than one alternative angle density map may be used so that, without loss of generality, all aspects described herein are applicable to and may be adapted to more than one adaptive angle density map.

### Determining an alternative angle density map -Fixed approach

In a fixed approach, one or more alternative angle density maps are predefined that stay constant throughout the encoding/decoding process. Such alternative maps may either be hardcoded in the specification or optimized at an encoder side and written in a High Level Syntax (HLS), such as Sequence Parameter Set (SPS) or Adaptive Parameter Set (APS) etc. Either way, a decoder does not have to determine an alternative angle density map at its end.

In accordance with embodiments, the angle density is changed by replacing a currently used (default) angle density map with a new angle density map, wherein the new angle density map is selected from one or more predefined angle density maps.

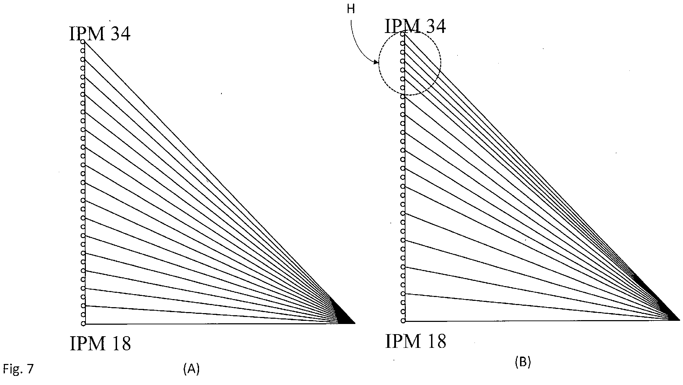

Fig. 7(A) and Fig. 7(B) illustrate two fixed alternative density maps in accordance with embodiments of the present disclosure. In accordance with embodiments, a fixed alternative angle density map is a map that has uniform gaps between angles with no particular preference for horizontal and vertical angles, as is depicted in Fig. 7(A) illustrating a fixed alternative density map with homogeneous density. In accordance with other embodiments, a fixed alternative angle density map is a map that has a reduced density around the horizontal and vertical angles and shift the density around pure diagonal angles, as is depicted in Fig. 7(B) illustrating a fixed alternative density map with shifted density around diagonal angle (see H), e.g. for IPM2, 34 and 66 in VVC.

In accordance with embodiments, a the fixed alternative density map may be selected from the one or more predefined alternative density maps dependent on a neighborhood texture, or on statistics of angular IPMs that have been selected by the CUs in the neighborhood.

In accordance with other embodiments, a texture-analysis, like a Histogram of Gradient (HoG) analysis in decoder side intra mode derivation (DIMD) or a template matching in template-based intra mode derivation (TIMD), is applied on available reconstructed samples from the neighborhood of the CU in order to select the alternative angle density map.

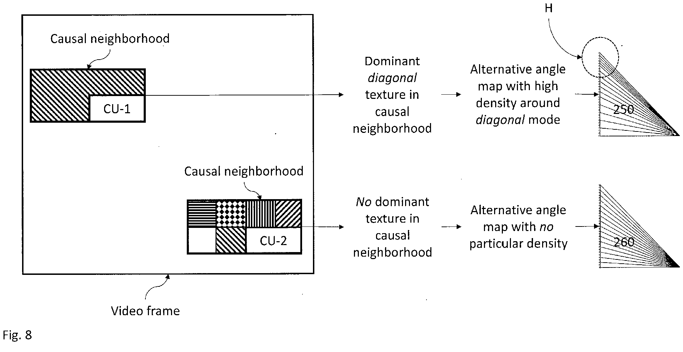

Fig. 8 illustrates a texture analysis process for selecting an alternative angle density map in accordance with embodiments of the present disclosure. In a video frame two CUs, CU-1 and CU-2, and their causal neighborhoods are illustrated. On each causal neighborhood the texture analysis is carried out find a dominant angle. For CU-1 a dominant angle is found, i.e., a dominant diagonal texture is found in the causal neighborhood of CU-1, and the currently used angle density map is replaced by an alternative angle density map 250 in which the angle density at and/or around the diagonal is increased (see H). For CU-2 no dominant angle is found, i.e., there is no dominant texture in the causal neighborhood of CU-2, and the currently used angle density map is replaced by an alternative angle density map 260 in which the angle density is uniform, i.e., a uniform angle density map 260 is selected.

### Explicit signaling

In accordance with embodiments, a new or selected angle density map is signaled explicitly in a data stream. At least one syntax element is transmitted in a data stream, like a bitstream, including information to indicate information to a receiver, like a decoder side, about the details of the angle density map switch. The values of these syntax elements are determined at an encoder side, e.g., by applying a Rate-Distortion Optimization (RDO) search to find the best parameters. In one embodiment, one flag is signaled for each CU to indicate the alternative angle density map which is to be used instead of the default angle density map. In another embodiment, when multiple alternative angle density maps are available, each CU is signaled an index indicating which of the alternative angle density maps is to be used instead of the default angle density map.

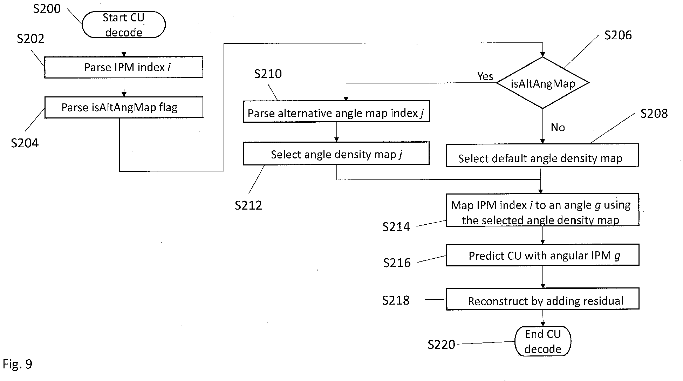

Fig. 9 illustrates the process at a decoder side to parse the explicit information about the adaptive angle density map switching in accordance with embodiments of the present disclosure. Following the start of the decoding of a block or CU at S200, the IPM index *i* is parsed S202 from the bitstream. Then the explicit information about the adaptive angle density map switching, the flag isAltAngMap is parsed S204 from the bitstream. At S206 the flag isAltAngMap is evaluated. Responsive to determining at S206 that the flag isAltAngMap is not set (NO), at S208 the default flag is selected. Responsive to determining at S206 that the flag isAltAngMap is set (YES), the alternative angle map index j is parsed S210 from the bitstream, and the angle density map j is selected S212. As S214 the IPM index i is mapped to an angle g using the selected angle density map and the CU is predicted S216 using the angular IPM g. At S218 the CU is reconstructed bay adding a residual signal, and at S220 the CU decoding ends.

### Implicit signaling

In accordance with embodiments, a new or selected angle density map is not signaled, and the new angle density map is determined implicitly using a texture of one or more further blocks in the neighborhood of the block, e.g., at a decoder side.
In the implicit approach, no syntax element is signaled in the bitstream to indicate whether a CU has used the adaptive angle density map. Instead, available information at the decoder side are used. In one embodiment, a texture analysis, like a HoG computation of DIMD, is performed on the neighborhood of the CU to determine one or more dominant angles. Then, the one or more angles are compared to a distribution of the angle density in the available angle density maps, e.g. in the default and alternative angle density maps. Finally, the CU picks the angle density map that best fits the texture characteristics of its neighborhood, i.e. that best fits the dominant angle. In another embodiment, the decoder side takes into account a statistical behavior of previously decoded CUs in the neighborhood and determines whether or not to switch to the alternative angle density map.

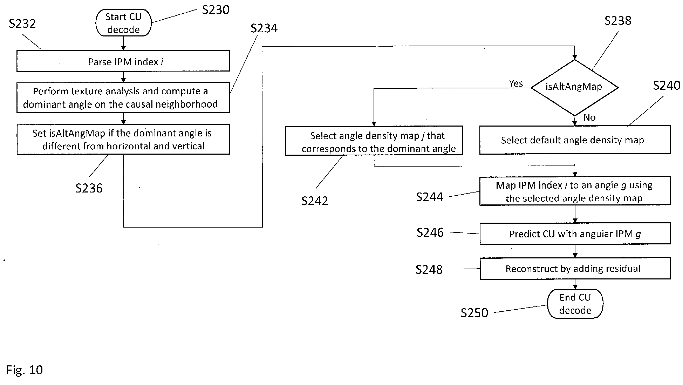

Fig. 10 illustrates the process at a decoder side to implicitly determine the alternative angle density map based on a dominant angle computed by a texture analysis on the casual neighborhood of a CU in accordance with embodiments of the present disclosure. Following the start of the decoding of a block or CU at S200, the IPM index i is parsed S232 from the bitstream. At S234 a texture analysis is performed and a dominant angle on the causal neighborhood is computed or determined, and at S236 the flag isAltAngMap is set responsive to determining that the dominant angle is different from horizontal and vertical. At S238 the flag isAltAngMap is evaluated. Responsive to determining at S238 that the flag isAltAngMap is not set (NO), at S240 the default flag is selected. Responsive to determining at S238 that the flag isAltAngMap is set (YES), the angle density map *j* that corresponds to the dominant angle is selected S242. As S244 the IPM index i is mapped to an angle g using the selected angle density map and the CU is predicted S246 using the angular IPM g. At S248 the CU is reconstructed bay adding a residual signal, and at S250 the CU decoding ends.

### History-based approach

In a history-based approach, information may be used that is available at an decoder side in order to obtain the alterative angle density map by dynamically adapting a currently used or default alternative angle density map to the neighborhood texture.

In accordance with embodiments, the statistics of angular IPMs that have been selected by the CUs in the neighborhood are used.

In accordance with other embodiments, a texture-analysis, like a Histogram of Gradient (HoG) analysis in decoder side intra mode derivation (DIMD) or a template matching in template-based intra mode derivation (TIMD), is applied on available reconstructed samples from the neighborhood of the CU in order to determine the alternative angle density map.

An embodiment of a texture analysis process for adapting a currently used angle density map is now described with reference to Fig. 8. In a video frame two CUs, CU-1 and CU-2, and their causal neighborhoods are illustrated. On each causal neighborhood the texture analysis is carried out find a dominant angle. For CU-1 a dominant angle is found, i.e., a dominant diagonal texture is found in the causal neighborhood of CU-1, and the currently used angle density map is adapted by shifting the angles towards the diagonal angle so that an angle density map 250 is obtained in which the angle density at and/or around the diagonal is increased (see H). For CU-2 no dominant angle is found, i.e., there is no dominant texture in the causal neighborhood of CU-2, and the currently used angle density map is adapted by shifting the angles in the density map such that the angle density is uniform, i.e., a uniform angle density map 260 is used.

### Explicit signaling

In accordance with embodiments, in a data stream the adapted angle density map may be explicitly indicated. The process may be as described with reference to Fig. 9 above, except that in S210 the adapted default angle density map itself is parsed from the bitstream. In another embodiment, S210 explicit information how the default angle density map is to be adapted is parsed from the bitstream and the default angle density map is adapted using the parsed information for obtaining the adapted default angle density map.

In accordance with other embodiments, only an indication that the default or currently used angle density map has been adapted is indicated, with the actual adaption performed at the receiver, like a decoder, using the texture of neighboring blocks. The process may be as described with reference to Fig. 9 above, except that the isAltAngMap flag indicates whether or not an adapted default angle density map has been at the encoder, and that in S210 and S212 the process for adapting a currently used angle density map as described with reference to Fig. 8 is performed for obtaining the adapted default angle density map a the selected angle density map.

### Implicit signaling

In accordance with embodiments, a change or modification of the default angle density map is not signaled in a data stream but adapted density map is determined at a receiver or decoder using the texture of neighboring blocks. The process may be as described with reference to Fig. 10 above, except that in S242 the default angle density map is adapted so as to correspond to the one or more dominant angles, e.g., by shifting the angles such that the angle density at and/or around the one or more dominant angles is increased.

### Granularity of determining the alternative angle density map

In accordance with embodiments, the adaptive switching to alternative angle density or updating/adapting of a default angle density map may can take place at different levels, e.g., CU, CTU etc. Regardless of fixed or history-based choice of alternative angle density map, different levels of granularity to apply the algorithm described herein may be considered. In accordance with embodiments, it is defined in which granularity one alternative density map can be replaced by another one. Once replaced, all impacted CUs only have possibility to switched to the newly replaced alternative angle density map. It is noted that, regardless of the granularity, the choice of the new density map can be made either with the fixed or history-based approach as described above.

In accordance with embodiments, the following granularities of switching to a new angle density map are provided:
- Sequence-level: This is the highest possible granularity level and allows replacing current alternative angle density map by another. In this level, all CUs in all CTUs of all frames use the same alternative density map.
- Frame-level: In this level, the alternative angle density map might be replaced at the beginning of the frame. Therefore, all CUs of all CTUs in the given frame use the same alternative angle density map.
- CTU-level: In CTU-level granularity, the alternative angle density map can be replaced at the beginning of each CTU.
- CU-level: This is the finest granularity, allowing to determine the alternative angle density map for each individual CU.

### Decoding Method

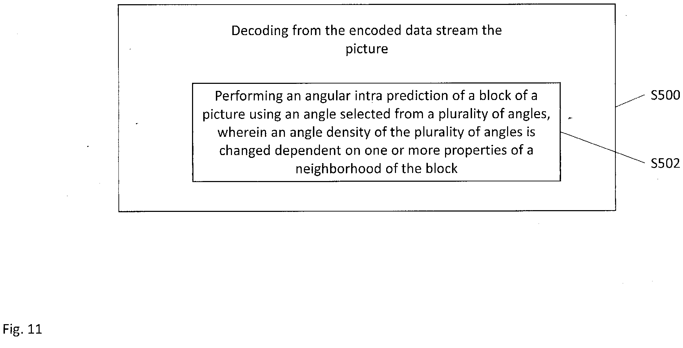

Fig. 11 illustrates a flow diagram of a method for decoding an encoded data stream, the encoded data stream including data representing a picture. The method includes the following:
S500: Decoding from the encoded data stream the picture, wherein decoding the picture comprises performing S502 an angular intra prediction of a block of the picture using an angle selected from a plurality of angles, wherein an angle density of the plurality of angles is changed dependent on one or more properties of a neighborhood of the block.

### Encoding Method

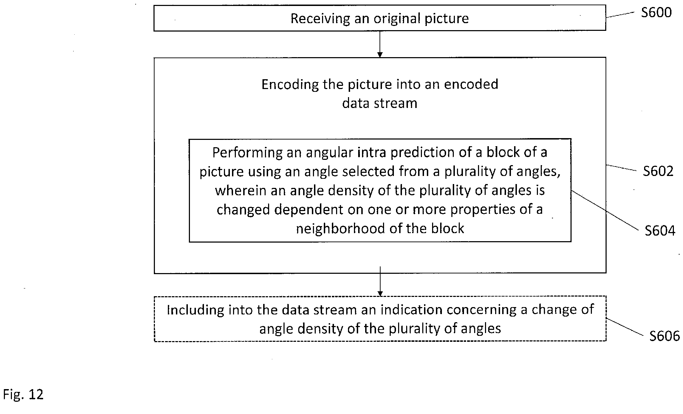

Fig. 12 illustrates a flow diagram of a method for encoding a picture into an encoded data stream. The encoded data stream includes data representing the picture and the method includes the following:
S600: Receiving an original picture.
S602: Encoding the picture into the encoded data stream, wherein encoding the picture comprises performing S604an angular intra prediction of a block of the picture using an angle selected from a plurality of angles, wherein an angle density of the plurality of angles is changed dependent on one or more properties of a neighborhood of the block.

Optionally, the method comprises including S606 into the data stream or bitstream an indication concerning a change of angle density of the plurality of angles, e.g., one or more of the following:
- an indication, e.g., a flag or an index, which indicates a change of an angle density of a plurality of angles used for performing an angular intra prediction of a block of the picture,
- an indication, e.g., a flag or an index, which indicates an angle density map including a plurality of angles used for performing an angular intra prediction of a block of the picture,
- an indication, e.g., a flag or an index, which indicates an adapted angle density map as obtained by adapting an angle density map currently used for performing an angular intra prediction of a block of the picture,
- an indication, e.g., a flag or an index, which indicates that an angle density map, which is currently used for performing an angular intra prediction of a block of the picture, has been changed, wherein the indication causes an adaption of the currently used angle density map to a texture of one or more further blocks in the neighborhood of the block.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

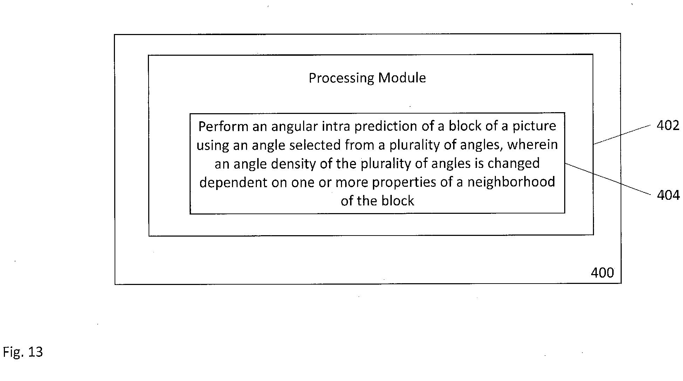

Fig. 13 illustrates a block diagram of an apparatus 400 of predicting one or more blocks of a picture in accordance with embodiments of the present disclosure. The apparatus 400 includes a processing module 402. The processing module is configured to perform 404 an angular intra prediction of a block of the picture using an angle selected from a plurality of angles, wherein an angle density of the plurality of angles is changed dependent on one or more properties of a neighborhood of the block.

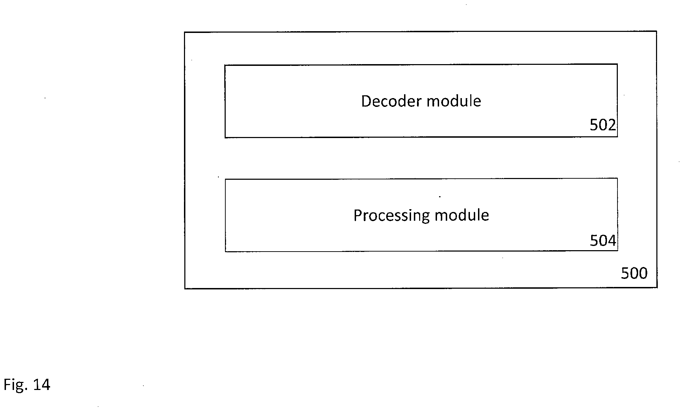

Fig. 14 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture.

504: A processing module, e.g., a prediction module 170 as depicted in Fig. 2. The processing module 502 is configured to operate in accordance with embodiments of the present disclosure. For example, the processing module 502 includes an apparatus as described with reference to Fig. 13.

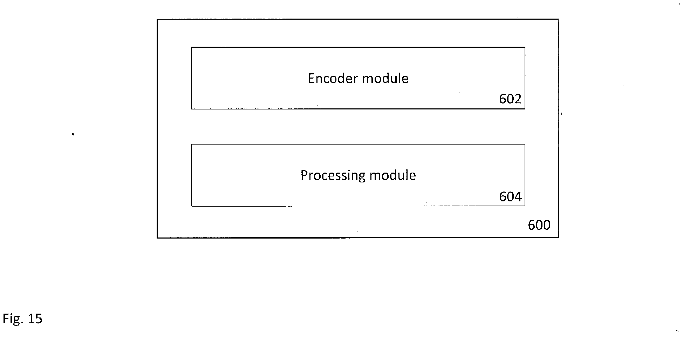

Fig. 15 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 13.

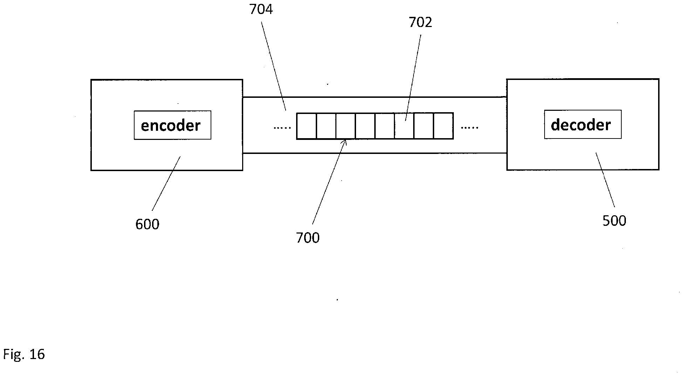

Fig. 16 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication concerning a change of angle density of the plurality of angles, e.g., one or more of the following:
- an indication, e.g., a flag or an index, which indicates a change of an angle density of a plurality of angles used for performing an angular intra prediction of a block of the picture,
- an indication, e.g., a flag or an index, which indicates an angle density map including a plurality of angles used for performing an angular intra prediction of a block of the picture,
- an indication, e.g., a flag or an index, which indicates an adapted angle density map as obtained by adapting an angle density map currently used for performing an angular intra prediction of a block of the picture,
- an indication, e.g., a flag or an index, which indicates that an angle density map, which is currently used for performing an angular intra prediction of a block of the picture, has been changed, wherein the indication causes an adaption of the currently used angle density map to a texture of one or more further blocks in the neighborhood of the block.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

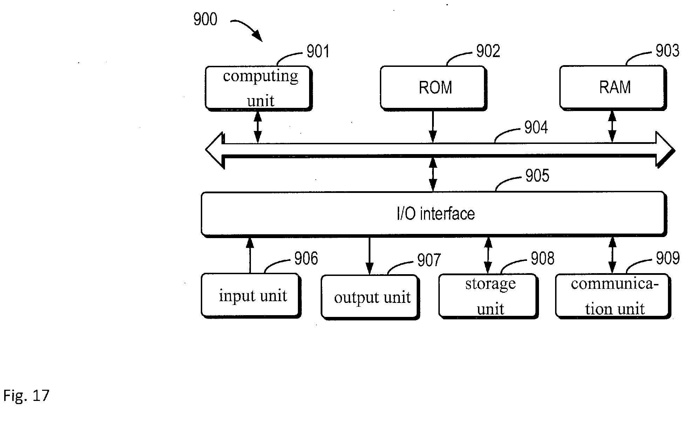

Fig. 17 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method of processing one or more blocks of a picture, the method comprising:
   performing an angular intra prediction of a block of the picture using an angle selected from a plurality of angles, wherein an angle density of the plurality of angles is changed dependent on one or more properties of a neighborhood of the block.
A 2^{nd} embodiment provides the method of the 1^{st} embodiment, wherein the one or more properties of the neighborhood of the block comprise one or more of the following:
   - a statistic of angular intra prediction modes, IPMs, used by one or more further blocks in the neighborhood of the block,
   - a texture of one or more further blocks in the neighborhood of the block.
A 3^{rd} embodiment provides the method of the 1^{st} or 2^{nd} embodiment, wherein the angle is an actual directional angle used for an angular intra prediction mode (IPM) for projecting reference samples of the block onto sample positions within the block, and wherein the angle is obtained from an angle density map providing the angles for the angular intra prediction modes (IPMs) with the angle density.
A 4^{th} embodiment provides the method of any one of the preceding embodiments, wherein the change of the angle density is explicitly signaled in a data stream.
A 5^{th} embodiment provides the method of any one of the preceding embodiments, wherein the angle density is changed by replacing a currently used angle density map with a new angle density map, and wherein the new angle density map is selected from one or more predefined angle density maps.
A 6^{th} embodiment provides the method of the 5^{th} embodiment, wherein the one or more predefined angle density maps are
   - hardcoded in the specification, or
   - indicated by using a High Level Syntax (HLS), like a Sequence Parameter Set (SPS).
A 7^{th} embodiment provides the method of the 5^{th} or 6^{th} embodiment, wherein the one or more predefined angle density maps comprise one or more of the following:
   - an angle density map having uniform gaps between the angles,
   - an angle density map having a first density around one or more first angles, like horizontal and vertical angles, and a second density around one or more second angles, like diagonal angles, the first density being lower than the second density,
   - an angle density map having a first density around one or more non-dominant angles, and a second density around one or more dominant angles, the first density being lower than the second density.
An 8^{th} embodiment provides the method of any one the 5^{th} to 7^{th} embodiments, wherein the new angle density map is selected dependent on a texture of one or more further blocks in the neighborhood of the block.
A 9^{th} embodiment provides the method of the 8^{th} embodiment, wherein the new angle density map is selected dependent on
   - statistics of angular intra prediction mode (IPMs) selected by one or more further blocks in the neighborhood of the block, or
   - a texture analysis of reconstructed samples from one or more further blocks in the neighborhood of the block.
A 10^{th} embodiment provides the method of the 9^{th} embodiment, wherein the texture analysis comprises
   - a Histogram of Gradient (HoG) analysis in decoder side intra mode derivation (DIMD), or
   - a template matching in template-based intra mode derivation (TIMD).
An 11^{th} embodiment provides the method of the 9^{th} or 10^{th} embodiment, wherein the texture analysis is performed to determine one or more dominant angles, and, dependent on the one or more dominant angles, the currently used angle density map is maintained or the new angle density map is selected.
A 12^{th} embodiment provides the method of the 11^{th} embodiment, wherein an angle density map, which fits best the one or more dominant angles, is selected from the one or more predefined angle density maps.
A 13^{th} embodiment provides the method of the 11^{th} or 12^{th} embodiment, wherein
   - in case the texture analysis determines one or more dominant angles which differ from one or more current dominant angles in the currently used angle density map by more than a predefined threshold, a new angle density map is selected, which provides an angle density that is decreased around the one or more current dominant angle and increased around the one or more new dominant angle, or
   - in case the texture analysis determines one or more new dominant angles which correspond to the one or more current dominant angles or differ from the one or more current dominant angles by less than the predefined threshold, no new the angle density map is selected, or
   - in case the texture analysis determines no dominant angle, an angle density map is selected that provides uniform gaps between the angles.
A 14^{th} embodiment provides the method of any one the 5^{th} to 13^{th} embodiments, wherein the new angle density map is signaled explicitly in the data stream.
A 15^{th} embodiment provides the method of the 14^{th} embodiment, wherein
   - in case the one or more predefined angle density maps includes only one angle density map, the data stream includes a first syntax element, like a flag, that indicates the use of the one angle density map as the new angle density map, or
   - in case the one or more predefined angle density maps includes two or more angle density maps, the data stream includes a second syntax element, like an index, that indicates which of the two or more angle density maps is used as the new angle density map.
A 16^{th} embodiment provides the method of any one the 5^{th} to 13^{th} embodiments, wherein the new angle density map is not signaled, and wherein the new angle density map is determined implicitly using a texture of one or more further blocks in the neighborhood of the block. A 17^{th} embodiment provides the method of any one of the 1^{st} to 4^{th} embodiments, wherein the angle density is changed by adapting a currently used angle density map.
An 18^{th} embodiment provides the method of the 17^{th} embodiment, wherein the currently used angle density map is adapted to a texture of one or more further blocks in the neighborhood of the block.
A 19^{th} embodiment provides the method of the 18^{th} embodiment, wherein the currently used angle density map is adapted using
   - statistics of angular intra prediction mode (IPMs)selected by one or more further blocks in the neighborhood of the block, or
   - a texture analysis of reconstructed samples from one or more further blocks in the neighborhood of the block.
A 20^{th} embodiment provides the method of the 19^{th} embodiment, wherein the texture analysis comprises
   - a Histogram of Gradient (HoG) analysis in Decoder side Intra Mode Derivation (DIMD), or
   - a template matching in template-based intra mode derivation (TIMD).
A 21^{st} embodiment provides the method of the 19^{th} or 20^{th} embodiment, wherein the texture analysis is performed to determine one or more dominant angles, and, dependent on the one or more dominant angles, the currently used angle density map is maintained or is adapted.
A 22^{nd} embodiment provides the method of the 21^{st} embodiment, wherein the currently used angle density map is adapted such that an angle density around the one or more dominant angles is increased.
A 23^{rd} embodiment provides the method of the 21^{st} or 22^{nd} embodiment, wherein
   - in case the texture analysis determines one or more new dominant angles which differ from one or more current dominant angles in the currently used angle density map by more than a predefined threshold, the angle density around the one or more current dominant angles is decreased and the angle density around the one or more new dominant angles is increased, or
   - in case the texture analysis determines one or more new dominant angles which corresponds to the one or more current dominant angles or differ from the one or more current dominant angle by less than the predefined threshold, the angle density of the currently used angle density map is not changed, or
   - in case the texture analysis determines no dominant angle, the angle density of the currently used angle density is changed to provide uniform gaps between the angles.
A 24^{th} embodiment provides the method of any one the 17^{th} to 23^{rd} embodiments, wherein a data stream signals
   - an adapted angle density map as obtained by adapting the currently used angle density map, or
   - that the currently used angle density map has been changed, wherein an adapted angle density map is obtained by adapting the currently used angle density map to the texture of one or more further blocks in the neighborhood of the block.
A 25^{th} embodiment provides the method of any one the 17^{th} to 23^{rd} embodiments, wherein a change of the currently used angle density map is not signaled, and wherein an adapted angle density map is obtained by adapting the currently used angle density map to the texture of one or more further blocks in the neighborhood of the block.
A 26^{th} embodiment provides the method of any one the preceding embodiments, wherein changing the angle density by replacing a currently used angle density map by a new angle density map or by adapting the currently used angle density map is performed at one of a plurality of different processing levels.
A 27^{th} embodiment provides the method of the 26^{th} embodiment, wherein the plurality of different processing levels comprises:
   - a sequence-level at which all coding units (CUs) in all coding tree units (CTUs) of all frames of a video content use the same new or adapted angle density map,
   - a frame-level at which the currently used angle density map is replaced or adapted at the beginning of a frame of a video content so that all coding units (CUs) of all coding tree units (CTUs) in the frame use the same new or adapted angle density map,
   - a CTU-level in which the currently used angle density map is replaced or adapted at the beginning of each coding tree unit (CTU),
   - a CU-level at which the currently used angle density map is replaced or adapted for each individual coding unit (CU).
A 28^{th} embodiment provides a non-transitory computer-readable storage medium comprising instructions which, when executed by a computer, cause the computer to carry out the method of any one of the preceding embodiments.
A 29^{th} embodiment provides an apparatus of processing one or more blocks of a picture, the apparatus comprising:
   a processing module, wherein the processing module is configured to perform an angular intra prediction of a block of the picture using an angle selected from a plurality of angles, wherein an angle density is changed dependent on one or more properties of a neighborhood of the block.
A 30^{th} embodiment provides an apparatus for decoding an encoded data stream, the encoded data stream including data representing a picture, the apparatus comprising:
   a decoder module configured to decode from the encoded data stream the picture,
      and
   a prediction module, the prediction module including an apparatus according to the 29^{th} embodiment.
A 31^{st} embodiment provides an apparatus for encoding a picture into an encoded data stream, the encoded data stream including data representing the picture, the apparatus comprising:
   an encoder module configured to receive the original picture and to encode the picture into the encoded data stream, and
   a prediction module, the prediction module including an apparatus according to the 29^{th} embodiment.
A 32^{nd} embodiment provides a data stream having encoded thereinto a picture, wherein the data stream comprises one or more of the following::
   - an indication, e.g., a flag or an index, which indicates a change of an angle density of a plurality of angles used for performing an angular intra prediction of a block of the picture,
   - an indication, e.g., a flag or an index, which indicates an angle density map including a plurality of angles used for performing an angular intra prediction of a block of the picture,
   - an indication, e.g., a flag or an index, which indicates an adapted angle density map as obtained by adapting an angle density map currently used for performing an angular intra prediction of a block of the picture,
   - an indication, e.g., a flag or an index, which indicates that an angle density map, which is currently used for performing an angular intra prediction of a block of the picture, has been changed, wherein the indication causes an adaption of the currently used angle density map to a texture of one or more further blocks in the neighborhood of the block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of processing one or more blocks of a picture, the method comprising:
performing an angular intra prediction of a block of the picture using an angle selected from a plurality of angles, wherein an angle density of the plurality of angles is changed dependent on one or more properties of a neighborhood of the block.

2. The method of claim 1, wherein the one or more properties of the neighborhood of the block comprise one or more of the following:
- a statistic of angular intra prediction modes, IPMs, used by one or more further blocks in the neighborhood of the block,
- a texture of one or more further blocks in the neighborhood of the block.

3. The method of claim 1 or 2, wherein the angle is an actual directional angle used for an angular intra prediction mode (IPM) for projecting reference samples of the block onto sample positions within the block, and wherein the angle is obtained from an angle density map providing the angles for the angular intra prediction modes (IPMs) with the angle density.

4. The method of any one of the preceding claims, wherein the angle density is changed by replacing a currently used angle density map with a new angle density map, and wherein the new angle density map is selected from one or more predefined angle density maps.

5. The method of claim 4, wherein the new angle density map is selected dependent on a texture of one or more further blocks in the neighborhood of the block by using
- statistics of angular intra prediction mode (IPMs) selected by one or more further blocks in the neighborhood of the block, or
- a texture analysis of reconstructed samples from one or more further blocks in the neighborhood of the block.

6. The method of claim 5, wherein the texture analysis is performed to determine one or more dominant angles, and, dependent on the one or more dominant angles, the currently used angle density map is maintained or an angle density map, which fits best the one or more dominant angles, is selected from the one or more predefined angle density maps.

7. The method of any one claims 4 to 6, wherein the new angle density map is signaled explicitly in the data stream.

8. The method of any one claims 4 to 6, wherein the new angle density map is not signaled, and wherein the new angle density map is determined implicitly using a texture of one or more further blocks in the neighborhood of the block.

9. The method of any one of claims 1 to 3, wherein the angle density is changed by adapting a currently used angle density map.

10. The method of claim 9, wherein the currently used angle density map is adapted to a texture of one or more further blocks in the neighborhood of the block, by using
- statistics of angular intra prediction mode (IPMs)selected by one or more further blocks in the neighborhood of the block, or
- a texture analysis of reconstructed samples from one or more further blocks in the neighborhood of the block.

11. The method of claim 10, wherein the texture analysis is performed to determine one or more dominant angles, and, dependent on the one or more dominant angles, the currently used angle density map is maintained or is adapted such that an angle density around the one or more dominant angles is increased.

12. The method of any one claims 9 to 11, wherein a change of the currently used angle density map is not signaled, and wherein an adapted angle density map is obtained by adapting the currently used angle density map to the texture of one or more further blocks in the neighborhood of the block.

13. The method of any one the preceding claims, wherein
changing the angle density by replacing a currently used angle density map by a new angle density map or by adapting the currently used angle density map is performed at one of a plurality of different processing levels, and
the plurality of different processing levels comprises:
- a sequence-level at which all coding units (CUs) in all coding tree units (CTUs) of all frames of a video content use the same new or adapted angle density map,
- a frame-level at which the currently used angle density map is replaced or adapted at the beginning of a frame of a video content so that all coding units (CUs) of all coding tree units (CTUs) in the frame use the same new or adapted angle density map,
- a CTU-level in which the currently used angle density map is replaced or adapted at the beginning of each coding tree unit (CTU),
- a CU-level at which the currently used angle density map is replaced or adapted for each individual coding unit (CU).

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured to perform an angular intra prediction of a block of the picture using an angle selected from a plurality of angles,
wherein an angle density is changed dependent on one or more properties of a neighborhood of the block.
